# EUROPÄISCHE PATENTSCHRIFT

(11) **EP 2 783 910 B1**
(45) Veröffentlichungstag und Bekanntmachung des Hinweises auf die Patenterteilung: **18.11.2015**
(21) Anmeldenummer: 13161098.2
(22) Anmeldetag: 26.03.2013
(51) Int. Cl.: B60N 2/48, B60N 2/64

(54) **Fahrzeugsitz mit einer integrierten Kopfstütze und Verfahren zur Herstellung eines Fahrzeugsitzes**
Vehicle seat comprising an integrated headrest and method for manufacturing a vehicle seat
Siège de véhicule doté d'un appuie-tête intégré et procédé de fabrication d'un siège de véhicule

(43) Veröffentlichungstag der Anmeldung: 01.10.2014
(73) Patentinhaber: Johnson Controls GmbH, 51399 Burscheid (DE)
(72) Erfinder: Alitonou, Moulero Brice, 77127 Lieusaint (FR); Werner, Hans-Georg, 40764 Langenfeld (DE); Bragard, Alain, 67310 Allenwiller (FR); Fournet, Pascal, 91120 Palaiseau (FR); Ellis, Anthony, 91100 Corbeil Essonnes (FR)
(74) Vertreter: Finger, Catrin

(56) Entgegenhaltungen:
- DE-A1-102008 061 738
- DE-C1- 3 816 167
- GB-A- 2 040 675
- US-A1- 2003 081 795
- US-A1- 2007 108 804
- US-B1- 6 637 822

## Beschreibung

Die Erfindung betrifft einen Fahrzeugsitz mit einer integrierten Kopfstütze gemäß dem Oberbegriff des Anspruchs 1. Weiterhin betrifft die Erfindung ein Verfahren zur Herstellung eines solchen Fahrzeugsitzes mit einer integrierten Kopfstütze gemäß dem Oberbegriff des Anspruchs 9.

Im Stand der Technik sind Fahrzeugsitze mit integrierten Kopfstützen bekannt, bei denen die Kopfstütze oder ein die Kopfstütze bildender Abschnitt in eine Rahmenstruktur des Fahrzeugsitzes integriert sind.

Die DE 10 2008 061 738 A1 beschreibt eine Kopfstütze, insbesondere für einen Fahrzeugsitz, welche mit einer zentralen Ausnehmung und einem Bezug versehen ist.

Die DE 10 2005 059 854 B4 beschreibt einen Fahrzeugsitz, insbesondere Sportsitz, mit wenigstens einer Sitzkomponente, welche eine tragende Struktur und Adapter zur optionalen Aufnahme/Anbringung einer komfortsteigernden Zusatzbaugruppe aufweist, wobei als tragende Struktur eine Rahmenschale vorgesehen ist, welche die Form eines Rahmens und die Funktion eines Adapters zur optionalen Aufnahme/Anbringung einer komfortsteigernden Zusatzbaugruppe in eine einzige, einstückig ausgebildeten Schale integriert, wobei die Rahmenschale in den Bereichen, welche bezüglich der Kraftaufnahme gering beansprucht sind, eine verringerte Materialstärke und/oder Aussparungen aufweist.

Die US 2007/0108804 A1 beschreibt eine Kopfstütze für einen Fahrzeugsitz mit einer Aussparung, in die eine Garnitur-Komponente zur Abdichtung der Aussparung angeordnet ist.

Weiterhin ist in der US 6,637,822 B1 eine Garnitur-Anordnung in einer Aussparung einer Kopfstütze offenbart, die zur Befestigung eines Garnitur-Elements in der Aussparung vorgesehen ist.

Darüber hinaus ist in der GB 2 040 675 A eine Kopfstützenanordnung beschrieben, bei der eine Aussparung angeordnet ist. In die Aussparung ist ein Befestigungselement zur Befestigung eines Polsterteils anordenbar.

Aufgabe der vorliegenden Erfindung ist es, einen gegenüber dem Stand der Technik verbesserten Fahrzeugsitz mit einer integrierten Kopfstütze und ein gegenüber dem Stand der Technik verbessertes Verfahren zur Herstellung eines solchen Fahrzeugsitzes mit einer integrierten Kopfstütze anzugeben.

Hinsichtlich des Fahrzeugsitzes mit einer integrierten Kopfstütze wird die Aufgabe durch die im Anspruch 1 angegebenen Merkmale gelöst.

Hinsichtlich des Verfahrens zur Herstellung eines solchen Fahrzeugsitzes mit einer integrierten Kopfstütze wird die Aufgabe durch die im Anspruch 9 angegebenen Merkmale gelöst.

Vorteilhafte Weiterbildungen der Erfindung sind Gegenstand der Unteransprüche.

Beim Fahrzeugsitz mit einer integrierten Kopfstütze, wobei Fahrzeugsitz und Kopfstütze visuell eine integrierte, absatzlose Einheit ausbilden, ist die Kopfstütze erfindungsgemäß mittels eines Adapterbauteils an einer bestehenden Sitzstruktur angeordnet, wobei das Adapterbauteil form-, stoff- und/oder kraftschlüssig an einem oberen Abschnitt einer Sitzlehnenstruktur angeordnet ist und integrierte Halteabschnitte aufweist, in die Kopfstützenstangen der Kopfstütze reversibel zumindest abschnittsweise einsetzbar und form- und/oder kraftschlüssig gehalten sind.

Mittels des Adapterbauteils ist eine Anordnung einer Kopfstütze an einer herkömmlichen, bestehenden Sitzstruktur unter Ausbildung einer integrierten Einheit von Fahrzeugsitz und Kopfstütze ermöglicht. Auf diese Weise sind die Kosten für einen Fahrzeugsitz, insbesondere einen Sportsitz, mit einer integrierten Kopfstütze signifikant reduzierbar.

Vorteilhafterweise weist das Adapterbauteil zu den Halteabschnitten führende Führungskanäle auf, welche als im Wesentlichen geradlinige Ausformung in den Adapterbauteil eingebracht sind und eine Demontage der Kopfstütze ermöglichen.

Besonders bevorzugt ist jedem Halteabschnitt ein separater Führungskanal zugeordnet.

In einer vorteilhaften Ausführungsform sind die Führungskanäle verrundet ausgebildet oder weisen einen runden Querschnitt auf und verlaufen von einem seitlichen Bereich des Adapterbauteils in Richtung der jeweiligen Halteabschnitte. Durch die verrundete Form der Führungskanäle sind diese ohne jegliche Absätze ausgeformt, wodurch ein darin angeordneter stabförmiger Gegenstand ungehindert geführt ist.

In einer ersten vorteilhaften Ausführungsform sind die Führungskanäle vollständig im Adapterbauteil angeordnet, so dass die Führungskanäle vollständig vom Material des Adapterbauteils umgeben sind.

In einer zweiten vorteilhaften Ausführungsform sind die Führungskanäle als halb- oder teilkreisartige Ausformung an einer Unterseite des Adapterbauteils angeordnet, so dass mittels eines Sitzlehnenpolsters ein vollständiger Kanal ausgebildet ist.

Besonders zweckmäßigerweise ist das Adapterbauteil aus einem Kunststoff oder einem Kunststoffgemisch in einem Gieß- oder Spritzgießverfahren hergestellt. Auf diese Weise sind insbesondere in einer Großserienproduktion besonders geringe Herstellungskosten ermöglicht.

In einer besonders vorteilhaften Ausführungsform ist das Adapterbauteil derart ausgeformt, dass ein homogener, vorzugsweise stufen- und/oder absatzloser Übergang zwischen dem Sitzlehnenpolster und der Kopfstütze ausgebildet ist. Durch einen derart ausgeformten Übergang ist visuell eine integrierte, absatzlose Einheit aus Fahrzeugsitz und Kopfstütze ausgebildet.

In einer Ausführungsvariante ist in einem zentralen Bereich des Adapterbauteils zumindest eine Aussparung angeordnet, welche verrundet und/oder mit verrundeten Kanten ausgebildet ist. Dadurch sind ein Werkstoffeinsatz am Adapterbauteil verringerbar und/oder eine Belüftung der Rücksitzlehne verbessert. Weiterhin können mittels derartiger Aussparungen unterschiedliche Designvariationen des Fahrzeugsitzes ausgebildet werden.

Beim Verfahren zur Herstellung eines Fahrzeugsitzes mit einer integrierten Kopfstütze wird ein Adapterbauteil form-, stoff- und/oder kraftschlüssig an einem oberen Abschnitt einer Sitzlehnenstruktur einer bestehenden Sitzstruktur angeordnet, wobei das Adapterbauteil integrierte Halteabschnitte aufweist, in die Kopfstützenstangen der Kopfstütze reversibel zumindest abschnittsweise einsetzbar und form- und/oder kraftschlüssig gehalten sind. Besonders vorteilhafterweise wird während einer Montage der Kopfstütze am Fahrzeugsitz zwischen einer Kopfstützenstange und einem jeweiligen Halteabschnitt im Adapterbauteil eine Rastverbindung ausgebildet, so dass die Kopfstützenstangen werkzeuglos im jeweiligen Halteabschnitt angeordnet werden.

Zur Demontage wird der Kopfstütze zweckmäßigerweise ein stabförmiger Gegenstand in jeden Führungskanal des Adapterbauteils eingeführt, welcher endseitig auf die Rastverbindung einwirkt und diese derart öffnet.

Anhand der beigefügten schematischen Figuren wird die Erfindung näher erläutert.

Dabei zeigen:
- Figur 1: schematisch eine perspektivische Ansicht eines erfindungsgemäßen Fahrzeugsitzes,
- Figur 2: schematisch eine perspektivische Ansicht einer Kopfstütze, welche mittels eines Adapterbauteils an einem Fahrzeugsitz angeordnet ist,
- Figur 3: schematisch eine weitere perspektivische Ansicht einer Kopfstütze, welche mittels eines Adapterbauteils an einem Fahrzeugsitz angeordnet ist,
- Figur 4: schematisch eine perspektivische, teiltransparente Ansicht eines erfindungsgemäßen Fahrzeugsitzes,
- Figur 5: schematisch eine perspektivische Explosionsdarstellung eines erfindungsgemäßen Fahrzeugsitzes und
- Figur 6: schematisch eine Demontage einer Kopfstütze unter Nutzung von Führungskanälen.

Einander entsprechende Teile sind in allen Figuren mit den gleichen Bezugszeichen versehen.

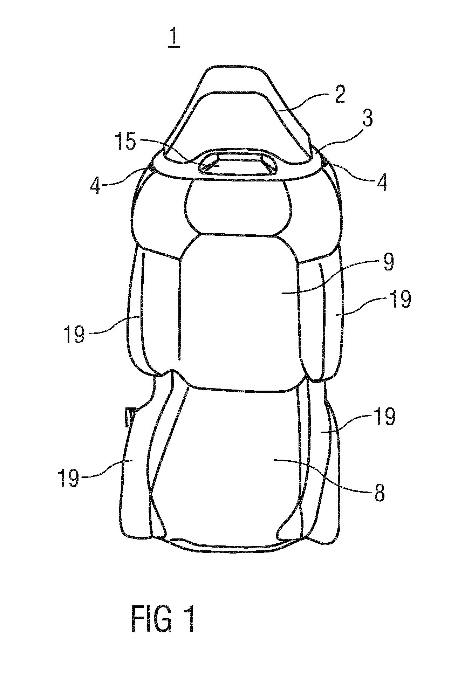

Figur 1 zeigt schematisch eine perspektivische Ansicht eines erfindungsgemäß ausgebildeten Fahrzeugsitzes 1. Erfindungsgemäß ist an einem solchen Fahrzeugsitz 1 eine Kopfstütze 2 derart angeordnet, dass eine integrierte Einheit von Fahrzeugsitz 1 und Kopfstütze 2, auch als Sportsitz bezeichnet, ausgebildet ist. Dabei ist die Kopfstütze 2 mittels eines Adapterbauteils 3 am Fahrzeugsitz 1 angeordnet.

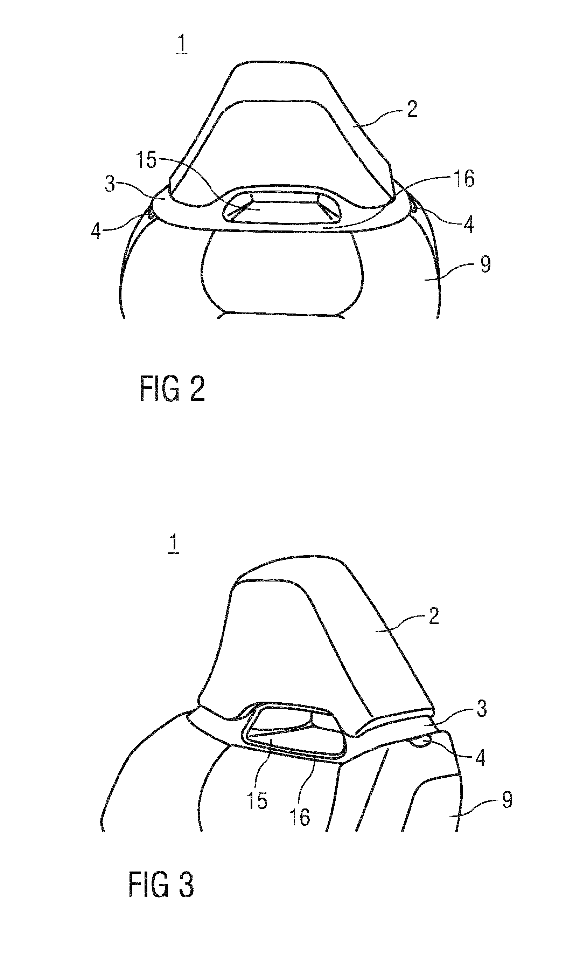

Figur 2 und 3 zeigen jeweils schematisch eine perspektivische Ansicht einer solchen Kopfstütze 2, welche mittels des Adapterbauteils 3 an einem Fahrzeugsitz 1 angeordnet ist, aus unterschiedlichen Perspektiven.

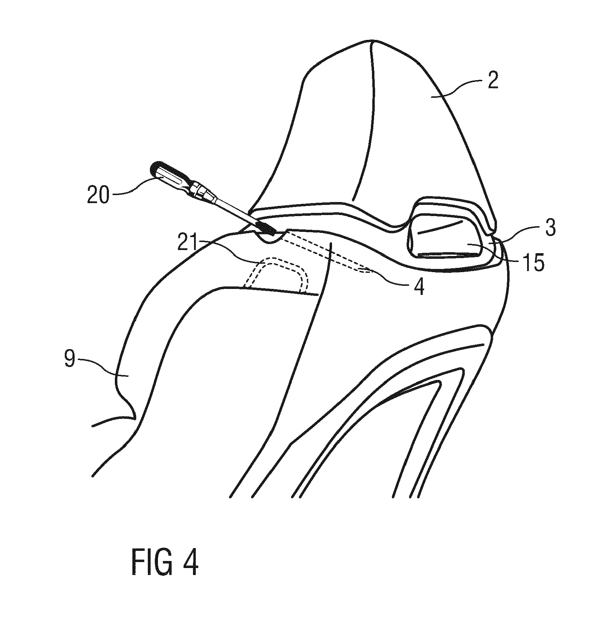

Figur 4 zeigt schematisch eine perspektivische, teiltransparente Ansicht eines erfindungsgemäßen Fahrzeugsitzes 1.

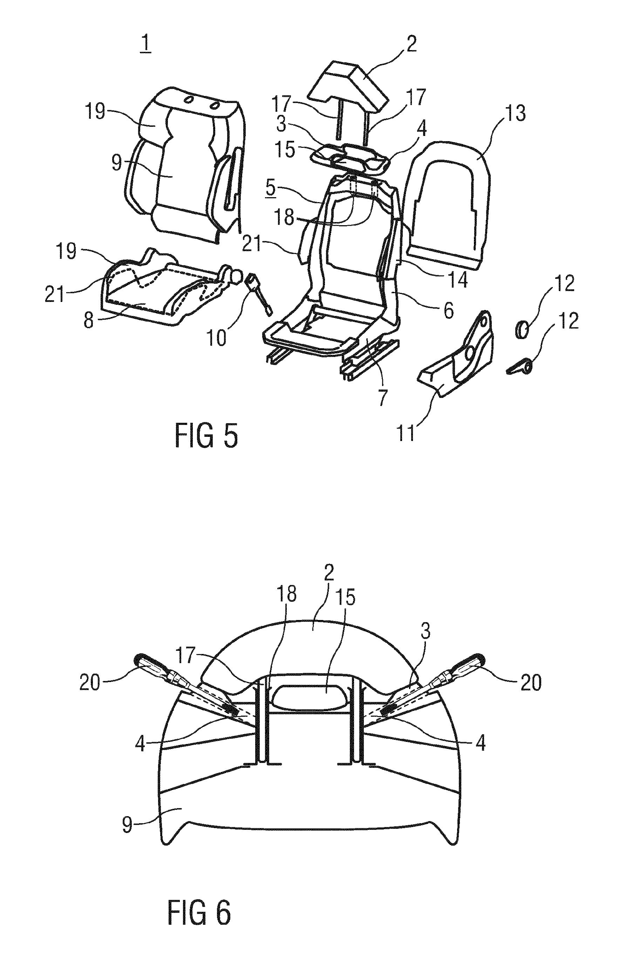

Figur 5 zeigt schematisch eine perspektivische Explosionsdarstellung eines erfindungsgemäßen Fahrzeugsitzes 1.

Figur 6 zeigt schematisch eine Demontage einer Kopfstütze 2 unter Nutzung von Führungskanälen 4.

Der Fahrzeugsitz 1 ist bevorzugt als herkömmlicher Fahrzeugsitz ausgebildet. Der Fahrzeugsitz 1 umfasst zumindest eine Sitzstruktur 5, welche aus einer Sitzlehnenstruktur 6 und einer Sitzflächenstruktur 7 gebildet ist, welcher schwenkbar miteinander gekoppelt sind, ein Sitzflächenpolster 8, ein Sitzlehnenpolster 9, ein Gurtschloss 10, zumindest eine Seitenabdeckung 11, zumindest ein Bedienelement 12, eine rückwärtige Sitzlehnenabdeckung 13 und ein Seitenluftkissenmodul 14.

Besonders bevorzugt sind an der Sitzstruktur 5 Halte- und Unterstützungselemente 21 angeordnet oder ausgeformt, welche in montiertem Zustand des Fahrzeugsitzes 1 in Sitzflächenpolstern 8 und Sitzlehnenpolstern 9 angeordnet sind und die in Sitzflächenpolstern 8 und Sitzlehnenpolstern 9 ausgeformten Seitenwangen 19 aussteifen und unterstützen.

Dabei weisen die Halte- und Unterstützungselemente 21 einen ovalen, runden oder nahezu runden Querschnitt auf und können rohrförmig ausgebildet sein.

Die Sitzstruktur 5 ist bevorzugt als bereits bestehende Sitzstruktur ausgebildet, d. h. die Sitzstruktur 5 kann auch in einem nicht dargestellten Fahrzeugsitz mit einer herkömmlichen, höhenverstellbaren Kopfstütze verwendet werden.

Erfindungsgemäß ist die Kopfstütze 2 mittels des Adapterbauteils 3 am Fahrzeugsitz 1 angeordnet. Dabei ist das Adapterbauteil 3 form-, stoff- und/oder kraftschlüssig an einem oberen Abschnitt der Sitzlehnenstruktur 6 angeordnet.

Das Adapterbauteil 3 ist vorzugsweise aus einem Kunststoff oder einem Kunststoffgemisch in einem Gieß- oder Spritzgießverfahren hergestellt.

Das Adapterbauteil 3 ist derart ausgeformt, dass ein homogener, vorzugsweise stufen- und/oder absatzloser Übergang zwischen Sitzlehnenpolster 9 und Kopfstütze 2 ausgebildet ist.

In einer bevorzugten Ausführungsvariante ist in einem zentralen Bereich des Adapterbauteils 3 eine Aussparung 15 angeordnet, welche bevorzugt verrundet und mit verrundeten Kante 16 ausgebildet ist.

Die Kopfstütze 2 weist unterseitig zwei Haltelemente in Form von Kopfstützenstangen 17 auf.

Im Adapterbauteil 3 sind Halteabschnitte 18 integriert, welche derart korrespondierend zu den Kopfstützenstangen 17 ausgebildet sind, dass die Kopfstützenstangen 17 reversibel in die Halteabschnitte 18 einsetzbar sind und somit die Kopfstütze 2 reversibel am Adapterbauteil 3 angeordnet ist.

Dabei ist zwischen Kopfstützenstange 17 und dem jeweiligen Halteabschnitt 18 im Adapterbauteil 3 eine form- und/oder kraftschlüssige Verbindung ausgebildet.

Besonders vorteilhafterweise ist zwischen Kopfstützenstange 17 und dem jeweiligen Halteabschnitt 18 im Adapterbauteil 3 eine Rastverbindung ausgebildet. Somit sind die Kopfstützenstangen 17 werkzeuglos im jeweiligen Halteabschnitt 18 des Adapterbauteils 3 anordenbar.

Weiterhin weist das Adapterbauteil 3 zu den Halteabschnitten 18 führende Führungskanäle 4 auf, welche eine Demontage der Kopfstütze 2 ermöglichen. Dazu sind die Führungskanäle 4 als im Wesentlichen geradlinige Ausformung in den Adapterbauteil 3 eingebracht. Die Führungskanäle 4 sind bevorzugt verrundet ausgebildet oder weisen einen runden Querschnitt auf und verlaufen von einem seitlichen Bereich des Adapterbauteils 3 in Richtung der jeweiligen Halteabschnitte 18.

Dabei können die Führungskanäle 4 vollständig im Adapterbauteil 3 angeordnet sein, d.h. die Führungskanäle 4 sind vollständig vom Material des Adapterbauteils 3 umgeben oder die Führungskanäle 4 sind als halb - oder teilkreisartige Ausformung an einer Unterseite des Adapterbauteils 3 angeordnet, so dass mittels des Sitzlehnenpolsters 9 ein vollständiger Kanal ausgebildet ist.

In die Führungskanäle 4 ist ein stabförmiger Gegenstand, beispielweise ein herkömmlicher Schraubendreher 20, einführbar. Dieser wirkt endseitig in nicht dargestellter Weise auf die form- und/oder kraftschlüssige Verbindung zwischen Kopfstützenstange 17 und dem jeweiligen Halteabschnitt 18 ein und öffnet diese derart, dass die Kopfstütze 2 vom Adapterbauteil 3 trennbar ist.

### Bezugszeichenliste

- 1: Fahrzeugsitz
- 2: Kopfstütze
- 3: Adapterbauteil
- 4: Führungskanal
- 5: Sitzstruktur
- 6: Sitzlehnenstruktur
- 7: Sitzflächenstruktur
- 8: Sitzflächenpolster
- 9: Sitzlehnenpolster
- 10: Gurtschloss
- 11: Seitenabdeckung
- 12: Bedienelement
- 13: Sitzlehnenabdeckung
- 14: Seitenluftkissenmodul
- 15: Aussparung
- 16: Kante
- 17: Kopfstützenstange
- 18: Halteabschnitt
- 19: Seitenwange
- 20: Schraubendreher
- 21: Halte- und Unterstützungselement

## Patentansprüche

1. Fahrzeugsitz (1) mit einer integrierten Kopfstütze (2), wobei Fahrzeugsitz (1) und Kopfstütze (2) visuell eine integrierte, absatzlose Einheit ausbilden,
**dadurch gekennzeichnet, dass** die Kopfstütze (2) mittels eines Adapterbauteils (3) an einer bestehenden Sitzstruktur (5) angeordnet ist, wobei das Adapterbauteil (3) form-, stoff- und/oder kraftschlüssig an einem oberen Abschnitt einer Sitzlehnenstruktur (6) angeordnet ist und integrierte Halteabschnitte (18) aufweist, in die Kopfstützenstangen (17) der Kopfstütze (2) reversibel zumindest abschnittsweise einsetzbar und form- und/oder kraftschlüssig gehalten sind.

2. Fahrzeugsitz (1) nach Anspruch 1,
**dadurch gekennzeichnet, dass** das Adapterbauteil (3) zu den Halteabschnitten (18) führende Führungskanäle (4) aufweist, welche als im Wesentlichen geradlinige Ausformung in dem Adapterbauteil (3) eingebracht sind und eine Demontage der Kopfstütze ermöglichen.

3. Fahrzeugsitz (1) nach Anspruch 2,
**dadurch gekennzeichnet, dass** jedem Halteabschnitt (18) ein separater Führungskanal (4) zugeordnet ist.

4. Fahrzeugsitz (1) nach Anspruch 2 oder 3,
**dadurch gekennzeichnet, dass** die Führungskanäle (4) verrundet ausgebildet sind oder einen runden Querschnitt aufweisen und von einem seitlichen Bereich des Adapterbauteils (3) in Richtung der jeweiligen Halteabschnitte (18) verlaufen.

5. Fahrzeugsitz (1) nach einem der Ansprüche 2 bis 4,
**dadurch gekennzeichnet, dass** die Führungskanäle (4) vollständig im Adapterbauteil (3) angeordnet sind, so dass die Führungskanäle (4) vollständig vom Material des Adapterbauteils (3) umgeben sind oder dass die Führungskanäle (4) als halb- oder teilkreisartige Ausformung an einer Unterseite des Adapterbauteils (3) angeordnet sind, so dass mittels eines Sitzlehnenpolsters (9) ein vollständiger Kanal ausgebildet ist.

6. Fahrzeugsitz (1) nach einem der vorherigen Ansprüche,
**dadurch gekennzeichnet, dass** das Adapterbauteil (3) aus einem Kunststoff oder einem Kunststoffgemisch in einem Gieß- oder Spritzgießverfahren hergestellt ist.

7. Fahrzeugsitz (1) nach Anspruch 5 oder 6,
**dadurch gekennzeichnet, dass** das Adapterbauteil (3) derart ausgeformt ist, dass ein homogener, vorzugsweise stufen- und/oder absatzloser Übergang zwischen einem Sitzlehnenpolster (9) und der Kopfstütze (2) ausgebildet ist.

8. Fahrzeugsitz (1) nach einem der vorherigen Ansprüche,
**dadurch gekennzeichnet, dass** in einem zentralen Bereich des Adapterbauteils (3) zumindest eine Aussparung (15) angeordnet ist, welche verrundet und/oder mit verrundeten Kanten (16) ausgebildet ist.

9. Verfahren zur Herstellung eines Fahrzeugsitzes (1) mit einer integrierten Kopfstütze (2) gemäß einem der vorherigen Ansprüche,
**dadurch gekennzeichnet, dass** ein Adapterbauteil (3) form-, stoff - und/oder kraftschlüssig an einem oberen Abschnitt einer Sitzlehnenstruktur (6) einer bestehenden Sitzstruktur (5) angeordnet wird, wobei das Adapterbauteil (3) integrierte Halteabschnitte (18) aufweist, in die Kopfstützenstangen (17) der Kopfstütze (2) reversibel zumindest abschnittsweise einsetzbar und form- und/oder kraftschlüssig gehalten sind.

10. Verfahren nach Anspruch 9,
**dadurch gekennzeichnet, dass** während einer Montage der Kopfstütze (2) am Fahrzeugsitz (1) zwischen einer Kopfstützenstange (17) und einem jeweiligen Halteabschnitt (18) im Adapterbauteil (3) eine Rastverbindung ausgebildet wird, so dass die Kopfstützenstangen (17) werkzeuglos im jeweiligen Halteabschnitt (18) angeordnet werden und dass zur Demontage der Kopfstütze (2) ein stabförmiger Gegenstand in jeden Führungskanal (4) des Adapterbauteils (3) eingeführt wird, welcher endseitig auf die Rastverbindung einwirkt und diese derart öffnet.

## Claims

1. Vehicle seat (1) comprising an integrated headrest (2), wherein vehicle seat (1) and headrest (2) visually form an integrated, shoulderless unit, **characterized in that** the headrest (2) is arranged on an existing seat structure (5) by means of an adapter component (3), wherein the adapter component (3) is arranged on an upper portion of a backrest structure (6) in a form-fitting, adhesively bonded and/or force-fitting manner and has integrated holding portions (18) into which headrest rods (17) of the headrest (2) are reversibly insertable at least in sections and are held in a form-fitting and/or force-fitting manner.

2. Vehicle seat (1) according to Claim 1, **characterized in that** the adapter component (3) has guide channels (4) which lead to the holding portions (18), are provided as a substantially rectilinear formation in the adapter component (3) and enable removal of the headrest.

3. Vehicle seat (1) according to Claim 2, **characterized in that** each holding portion (18) is assigned a separate guide channel (4).

4. Vehicle seat (1) according to Claim 2 or 3, **characterized in that** the guide channels (4) are of rounded design or have a round cross section and run from a lateral region of the adapter component (3) in the direction of the respective holding portions (18) .

5. Vehicle seat (1) according to one of Claims 2 to 4, **characterized in that** the guide channels (4) are arranged entirely in the adapter component (3), and therefore the guide channels (4) are completely surrounded by the material of the adapter component (3), or **in that** the guide channels (4) are arranged as a semicircular or partially circular formation on a lower side of the adapter component (3) such that a complete channel is formed by means of a backrest cushion (9).

6. Vehicle seat (1) according to one of the preceding claims, **characterized in that** the adapter component (3) is produced from a plastic or plastics mixture in a casting or injection-moulding process.

7. Vehicle seat (1) according to Claim 5 or 6, **characterized in that** the adapter component (3) is formed in such a manner that a homogeneous, preferably stepless and/or shoulderless transition is formed between a backrest cushion (9) and the headrest (2).

8. Vehicle seat (1) according to one of the preceding claims, **characterized in that** at least one recess (15) which is of rounded design and/or is designed with rounded edges (16) is arranged in a central region of the adapter component (3).

9. Method for manufacturing a vehicle seat (1) comprising an integrated headrest (2) according to one of the preceding claims, **characterized in that** an adapter component (3) is arranged on an upper portion of a backrest structure (6) of an existing seat structure (5) in a form-fitting, adhesively bonded and/or force-fitting manner, wherein the adapter component (3) has integrated holding portions (18) into which headrest rods (17) of the headrest (2) are reversibly insertable at least in sections and are held in a form-fitting and/or force-fitting manner.

10. Method according to Claim 9, **characterized in that**, during installation of the headrest (2) on the vehicle seat (1), a latching connection is formed between a headrest rod (17) and a respective holding portion (18) in the adapter component (3), and therefore the headrest rods (17) are arranged in the respective holding portion (18) without a tool, and **in that**, in order to remove the headrest (2), a rod-shaped object is introduced into each guide channel (4) of the adapter component (3), the end side of the rod-shaped object acting on the latching connection and thereby opening the latter.

## Revendications

1. Siège de véhicule (1) comprenant un appui-tête intégré (2), le siège de véhicule (1) et l'appui-tête (2) constituant visuellement une unité intégrée sans gradin,
**caractérisé en ce que** l'appui-tête (2) est disposé au moyen d'un composant adaptateur (3) sur une structure de siège existante (5), le composant adaptateur (3) étant disposé par engagement par correspondance de formes, par liaison de matière et/ou par force sur une portion supérieure d'une structure de dossier (6) et présentant des portions de fixation intégrées (18), dans lesquelles des barres d'appui-tête (17) de l'appui-tête (2) peuvent être insérées au moins en partie de manière réversible et sont fixées par engagement par correspondance de formes et/ou par force.

2. Siège de véhicule (1) selon la revendication 1,
**caractérisé en ce que** le composant adaptateur (3) présente des canaux de guidage (4) conduisant aux portions de fixation (18), lesquels sont montés dans le composant adaptateur (3) essentiellement sous forme de formation rectiligne et permettent un démontage de l'appui-tête.

3. Siège de véhicule (1) selon la revendication 2,
**caractérisé en ce**
**qu'**un canal de guidage séparé (4) est associé à chaque portion de fixation (18).

4. Siège de véhicule (1) selon la revendication 2 ou 3,
**caractérisé en ce que** les canaux de guidage (4) sont réalisés sous forme arrondie ou présentent une section transversale circulaire et s'étendent depuis une région latérale du composant adaptateur (3) dans la direction des portions de fixation respectives (18).

5. Siège de véhicule (1) selon l'une quelconque des revendications 2 à 4,
**caractérisé en ce que** les canaux de guidage (4) sont complètement disposés dans le composant adaptateur (3) de telle sorte que les canaux de guidage (4) soient complètement entourés par le matériau du composant adaptateur (3) ou **en ce que** les canaux de guidage (4) sont disposés sous forme de formation semi-circulaire ou partiellement circulaire sur un côté inférieur du composant adaptateur (3) de telle sorte qu'un canal complet soit réalisé au moyen d'un rembourrage de dossier (9) .

6. Siège de véhicule (1) selon l'une quelconque des revendications précédentes,
**caractérisé en ce que** le composant adaptateur (3) est fabriqué à partir d'un plastique ou d'un mélange de plastiques par un procédé de moulage ou de moulage par injection.

7. Siège de véhicule (1) selon la revendication 5 ou 6,
**caractérisé en ce que** le composant adaptateur (3) est formé de telle sorte que l'on obtienne une transition homogène, de préférence sans gradin et/ou sans épaulement, entre un rembourrage de dossier (9) et l'appui-tête (2).

8. Siège de véhicule (1) selon l'une quelconque des revendications précédentes,
**caractérisé en ce qu'**au moins un évidement (15) est disposé dans une région centrale du composant adaptateur (3), lequel est réalisé sous forme arrondie et/ou avec des bords arrondis (16).

9. Procédé de fabrication d'un siège de véhicule (1) avec un appui-tête intégré (2) selon l'une quelconque des revendications précédentes,
**caractérisé en ce qu'**un composant adaptateur (3) est disposé par engagement par correspondance de formes, par liaison de matière et/ou par force sur une portion supérieure d'une structure de dossier (6) d'une structure de siège existante (5), le composant adaptateur (3) présentant des portions de fixation intégrées (18), dans lesquelles des barres d'appui-tête (17) de l'appui-tête (2) peuvent être insérées au moins en partie de manière réversible et sont fixées par engagement par correspondance de formes et/ou par force.

10. Procédé selon la revendication 9,
**caractérisé en ce que** pendant un montage de l'appui-tête (2) sur le siège de véhicule (1), une connexion par encliquetage est réalisée entre une barre d'appui-tête (17) et une portion de fixation respective (18) dans le composant adaptateur (3), de telle sorte que les barres d'appui-tête (17) soient disposées sans outils dans la portion de fixation respective (18) et que pour le démontage de l'appui-tête (2) un objet en forme de barre soit introduit dans chaque canal de guidage (4) du composant adaptateur (3) qui agit du côté de l'extrémité sur la connexion par encliquetage et ouvre alors celle-ci.
